# EUROPEAN PATENT APPLICATION

(11) **EP 4 749 757 A1**
(43) Date of publication of application: **27.05.2026**
(21) Application number: 25171029.9
(22) Date of filing: 16.04.2025
(51) Int. Cl.: H01M 10/42, G06F 21/73, G06Q 10/30, H01M 10/54, H04L 9/00

(54) **SMART BATTERY DEVICE AND ITS RECYCLING METHOD AND SYSTEM**

(30) Priority: 20.11.2024 TW 113144653
(71) Applicant: Quanta Computer Inc., Taoyuan City 333 (TW)
(72) Inventor: YEN, Wei-Ting, 333 Taoyuan City (TW)
(74) Representative: Michalski Hüttermann & Partner Patentanwälte mbB

(57) **Abstract**

A smart battery device is provided. The smart battery device includes a processing module and a battery cell. The processing module includes a storage module and an encryption module. The storage module is configured to store battery history associated with the battery cell, wherein the processing module is used to read and write to the storage module. The encryption module is configured to encrypt at least a portion of information in the battery history by an encryption mechanism. The battery cell is electrically coupled to the processing module, and the processing module is powered by the battery cell.

## Description

### BACKGROUND OF THE INVENTION

### Field of the Invention

The present invention relates to a smart battery device, and in particular it relates to a smart battery device that can be easily categorized, recycled and sourced, as well as recycling methods and systems thereof.

### Description of the Related Art

In recent years, with the booming development of cell phones, laptops, electric vehicles and the like, the use of batteries has increased dramatically, resulting in a concomitant increase in the recycling of discarded batteries. It is expected that a large-scale "retirement wave" of batteries will come in the future, and how to effectively recycle and dispose of these waste batteries has become an important issue.

A battery contains many key components such as cathode and anode materials, and valuable metals such as nickel, cobalt, manganese and copper. These materials and metals are finite resources. Proper recycling and reuse of these materials and metals will not only contribute to environmental protection, but also promote the recycling of resources, which is in line with the global trend of Environmental, Social, and Governance (ESG) and the goal of "Zero Carbon Emissions".

At present, the technology used in battery recycling focuses mainly on extracting valuable metals from waste batteries and further purifying them to achieve higher purity for subsequent reuse. For example, the United States and European countries have been actively developing electric vehicles and energy storage industries in recent years, which has resulted in a significant increase in demand for batteries. Thus, more emphasis has been placed on battery recycling.

The existing methods of battery recycling can be mainly categorized into the pyrometallurgy and hydrometallurgy. Pyrometallurgy costs less, but the recovery rate is lower and the pollution it causes is more severe. Hydrometallurgy has a higher recovery rate and less pollution, but the cost is higher. In addition, some manufacturers try to reuse the recycled metal materials in battery manufacturing to shorten the product cycle and improve resource utilization.

However, the current battery recycling technology still faces some challenges. The battery material system is diverse and the recycling process is complicated, for example, and the quality and performance of the recycled material is difficult to guarantee. Moreover, recycling industry chain is not transparent, and it is difficult to track the source, and ultimate destination, of materials.

Therefore, a more scientific, environmentally friendly, and sustainable approach to battery recycling management is needed to ensure the effective utilization of resources and environmental protection, and to promote the development of a circular economy.

### BRIEF SUMMARY OF THE INVENTION

In order to solve the above challenges of battery recycling and processing technology, the present invention provides a smart battery device and a recycling method and system, which utilizes a battery device to set up a certificate, trace the process of the recycling mechanism and manage it systematically so as to achieve the purpose of sustainable management and tracking the source and flow of materials.

The present invention provides a smart battery device. The smart battery device comprises a processing module and a battery cell. The processing module comprises: a storage module and an encryption module. The storage module is configured to store battery history associated with the battery cell, wherein the processing module is used to read and write to the storage module. The encryption module is configured to encrypt at least a portion of the information in the battery history by using an encryption mechanism. The battery cell is electrically coupled to the processing module, and the processing module is powered by the battery cell.

The present invention provides a recycling system for the smart battery device. The recycling system comprises: the smart battery device as described above and an electronic device. The electronic device comprises a decryption module. The decryption module can decrypt and read an encrypted battery history of the smart battery device.

The present invention provides a recycling method for the smart battery device. The recycling method comprises: a storage step, an encryption step and a sorting step. The storage step is used for storing the battery history in the smart battery device. The battery history comprises a material system, production history, and recycling information of a battery. The encryption step is used for encrypting at least a portion of the information in the battery history by utilizing the encryption mechanism. The sorting step is used for sorting the battery device for recycling based on the battery history.

### BRIEF DESCRIPTION OF THE DRAWINGS

The present invention can be more fully understood by reading the subsequent detailed description and examples with references made to the accompanying drawings, wherein:
FIG. 1 is a schematic diagram of the battery device 200 of an embodiment in the present invention.
FIG. 2 is a schematic block diagram of the battery device 200 of an embodiment in combination with an electronic device in the present invention.
FIG. 3 is a flowchart of the recycling method of the battery device of an embodiment in the present invention.

### DETAILED DESCRIPTION OF THE INVENTION

The present invention is described with reference to the accompanying drawings, wherein the same reference numerals throughout the drawings indicate similar or identical components. The drawings are not to actual scale and are provided for illustrative purposes only. Some types of the invention are depicted below as references to the example application of the illustrations. This means that many specific details, relationships and methods are described to provide a complete understanding of the invention. In any event, a person with the general knowledge in the relevant field will recognize that the invention still could be realized even if without one or more of the special details or by other means.

In other examples, the well-known structures or operations are not listed in detail to avoid confusion about the invention. The present invention is not limited by the sequence of behaviors or events described (e.g., some behaviors may occur in a different sequence or simultaneously under other behaviors or events). In addition, not all of the described behaviors or events need to be performed in the same way as in the present invention.

### I. Smart Battery Device

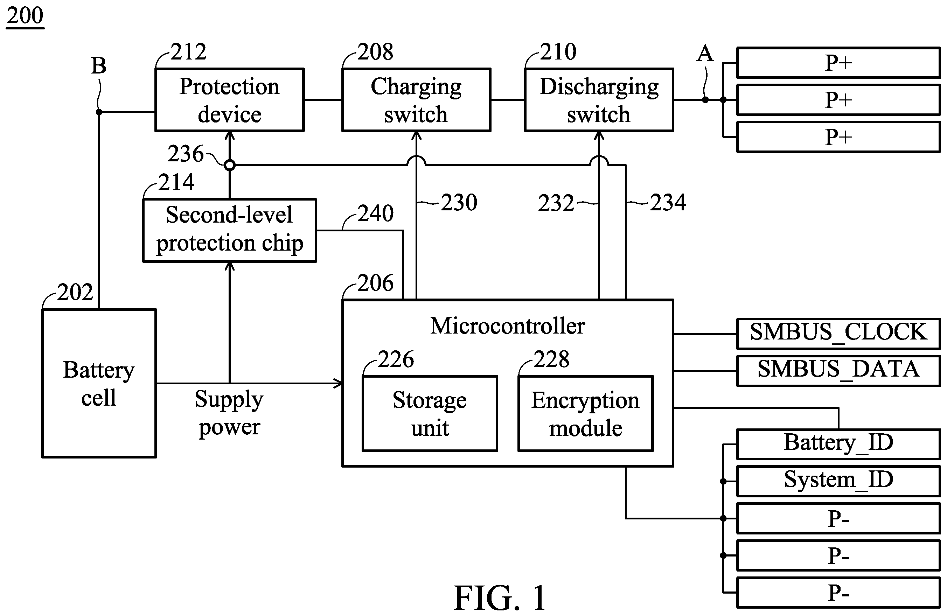

FIG. 1 is a schematic diagram of the battery device 200 of an embodiment in the present invention. As shown in FIG. 1, the battery device 200 includes a battery cell 202, a microcontroller 206, a charging switch 208, a discharging switch 210, a protection device 212, a second-level protection chip 214, a communication bus SMBUS_DATA, a communication bus SMBUS_CLOCK, a battery identification indicator BATTERY_ID, a battery identification indicator SYSTEM _ID, a logic control circuit 236, at least one cathode P+ and at least one anode P-.

In an embodiment, the microcontroller 206 may also include, but is not limited to, a storage unit 226 and an encryption module 228 integrated in the microcontroller 206. The microcontroller 206 is an example of a "processing unit" disclosed herein. In an embodiment, the processing unit may also be a System on a Chip (SoC), an Application-Specific Integrated Circuit (ASIC), an Application Processor (AP) or a Digital Signal Processor (DSP) for executing the corresponding program to realize, but is not limited thereto.

In an embodiment, the storage unit 226 is used for the microcontroller 206 to read, write the battery history associated with the battery cell 202, but is not limited thereto. In an embodiment, the storage unit 226 comprises a memory, such as the volatile memory or non-volatile memory. The volatile memory may include, for example, a register, a Dynamic Random Access Memory (DRAM) or a Static Random Access Memory (SRAM), but is not limited thereto. The non-volatile memory may include, for example, a flash memory and a read-only memory, but is not limited thereto.

In an embodiment, the battery cell 202 may convert the received electrical energy into the chemical energy for storage, or convert the stored chemical energy into the electrical energy for output. In an embodiment, the battery history associated with the battery cell 202 refers to the information such as the material system of the battery cell, the type of material, the supplier, the number of recycles, the material proportion and the like, but is not limited thereto.

In an embodiment, the encryption module 228 utilizes an encryption mechanism to encrypt at least a portion of the information (e.g., sensitive information such as the material proportion) in the battery history, but is not limited thereto. The functions and actions of the encryption module 228 may be realized by executing the corresponding programs through the microcontroller 206 or through the hardware such as the system-on-chip (SoC), special application integrated circuit (ASIC), application processor (AP) or digital signal processor (DSP), but is not limited thereto.

The second-level protection chip 214 is electrically coupled to the battery cell 202 to determine whether to activate a protective measure of the battery device 200 based on a state of the battery cell 202 (e.g., charging voltage, charging current or discharging current, etc.). In some embodiments, the protective measures include over voltage protection (OVP), over current protection (OCP), over temperature protection (OTP), under voltage protection (UVP), under temperature protection (UTP), reverse voltage protection and short circuit protection.

In some embodiments, when the battery cell 202 is charging, and the microcontroller 206 may output a signal 230 to the charging switch 208 to turn off the charging switch 208, then the battery device 200 would stop charging. In some embodiments, when the battery cell 202 is discharging, and the microcontroller 206 activates the over current protection, the over temperature protection, the low voltage protection, the low temperature protection, the reverse voltage protection and the short circuit protection of the protective measures, the microcontroller 206 may output a signal 232 to the discharging switch 210 to turn off the discharging switch 210, then the battery device 200 would stop discharging.

As shown in FIG. 1, the charging switch 208 is electrically coupled between the protection device 212 and the discharging switch 210. The discharging switch 210 is electrically coupled between the cathode P+ and the charging switch 208. The charging switch 208 changes its state in response to the signal 230 from the microcontroller 206. For example, when the signal 230 is a logic low level such as "0", the charging switch 208 only allows the current to flow from the node B to the node A, but prohibits the current to flow from the node A to the node B. When the signal 230 is a logic high level such as "1", the charging switch 208 is in full conduction. The discharging switch 210 changes its state in response to the signal 232 from the microcontroller 206. For example, when the signal 232 is a logic low level such as "0", the discharging switch 210 only allows the current to flow from the node A to the node B, but prohibits the current to flow from the node B to the node A. When the signal 232 is a logic high level such as "1", the discharging switch 210 is in full conduction.

The microcontroller 206 is electrically coupled to the second-level protection chip 214 and may detect a relative state of charge (RSOC) of the battery cell 202. In some embodiments, the microcontroller 206 may communicate with the second-level protection chip 214 through a communication interface 240. For example, the microcontroller 206 may obtain the information such as the charge/discharge current and the charge/discharge voltage of the battery cell 202 from the second-level protection chip 214 through the communication interface 240. In some embodiments, the communication interface 240 is an I2C communication interface, but the present invention is not limited thereto. The microcontroller 206 may control the electrical energy from the battery cell 202 to output through the cathode P+ of the battery device 200 and to return the electrical energy to the battery cell 202 from the anode P- of the battery device 200. Alternatively, the microcontroller 206 may control an external power source (not shown) outside the battery device 200 to charge the battery cell 202.

In some embodiments, when the protection chip (e.g., second-level protection chip 214 of FIG. 1) of the battery device 200 has activated the protective measure, but fails to turn off the charging switch or the discharging switch (e.g., the charging switch and/or the discharging switch are damaged), the microcontroller 206 outputs a third signal (e.g., signal 234) to the protection device (e.g., protection device 212 of FIG. 1), which causes the protection device to disconnect.

In some embodiments, a logic control circuit 236 is, for example, a logic OR circuit that receives the signal 234 from the microcontroller 206 and the signal from the second-level protection chip 214 to disconnect the protection device 212 when either of the microcontroller 206 and the second-level protection chip 214 initiates the protective measure, but is not limited thereto.

In some embodiments, the battery device 200 is included in an electronic device having at least one processor. The electronic device may be, for example, a laptop, a tablet, a wearable device, a smart phone, or the like. In some embodiments, the electronic device may also be a vehicle such as an electric vehicle, in which case the battery device 200 is equivalent to a vehicle battery.

In some embodiments, the microcontroller 206 may be used to communicate with at least one processor of the electronic device having the battery device 200 through the communication bus SMBUS_CLOCK and the communication bus SMBUS_DATA. In some embodiments, the battery identification indication BATTERY_ID and the battery identification indication SYSTEM_ID of the battery device 200 enable the at least one processor of the electronic device having the battery device 200 to detect that the battery device 200 has been set up in the electronic device.

In some embodiments, the microcontroller 206 may receive the battery history containing the material system, production history, and recycling information of the battery through the communication buses SMBUS_CLOCK and SMBUS_DATA. The microcontroller 206 may also record the battery history by monitoring and recording the charging and discharging of the battery device.

In the present invention, the battery history (such as material information, production history, and recycling information of the battery device) is recorded in the storage unit 226. The encryption mechanism in the encryption module 228 is used to protect a part of the information to safeguard the sensitive information and at the same time realize the recycling utilization of the battery material and the sustainable management.

In an embodiment, the battery history including the material information, production history, and recycling information, etc., is recorded in textual and numerical forms in the storage unit 226. For example, the storage unit may be a random access memory (RAM), a read-only memory (ROM), a register, etc., having a certain amount of storage space, and the battery history is stored in a specific address, but is not limited thereto.

In an embodiment, the battery history includes the following information. The material system (e.g., ternary lithium (also known as nickel-cobalt-manganese) battery, lithium iron phosphate battery, etc.); the supplier (e.g., the supplier information of the battery material); the number of recycling utilization: the number of times the battery material has been recycled; the material proportion: the proportion of the various materials in the battery (e.g., the proportion of nickel, cobalt, and manganese, etc.).

In an embodiment, the information (such as the material system, supplier, recycling times, material proportion, etc.) is defined at the specific address (e.g., the address 0x70) of the storage unit 226 as shown in Table 1 below, which presents the battery material information by using, for example, a 32 byte textual and numerical distinction. These pieces of information are stored in the storage unit 226.

**Table 1:**

| Info | Example |
|---|---|
| Material system | LCO, NCM, LFP or LMFP |
| Supplier | Company A |
| Recycling times | 0 |
| Material proportion | Nickel:80%, cobalt:15%, manganese:5%. |

In an embodiment, the material system information is stored at the specific address (e.g., address 0x70) in the storage unit 226, which may be broadly categorized as lithium cobalt oxide (LCO), nickel cobalt manganese (NCM), lithium iron phosphate (LFP), or lithium manganese iron phosphate (LMFP), but is not limited thereto.

In an embodiment, the supplier information is stored at the specific address in the storage unit 226, and the supplier can be listed as company A, company B, or company C, but is not limited hereto. For example, the supplier can also be the source of information regarding the region of origin.

In an embodiment, the information of the number of recycles is stored at the specific address in the storage unit 226 (e.g., the number of recycles is accumulated in the order of 0, 1, but is not limited thereto. For example, the information of the number of recycles can also be the number of hours of use, the date of the last recycling, the date of manufacture, and the like.

In an embodiment, the material proportion information is stored at the specific address in the storage unit 226 (e.g., nickel: 50%, cobalt: 20%, manganese: 30%, etc., also known as nickel-cobalt manganese battery system type 523 (also referred to as NCM 523)), but is not limited thereto. For example, the material proportion information can also include more information on components, materials, etc., and the proportion of each material may also be the mass proportion, volume proportion, or molarity proportion.

In the present invention, the material system of the battery can be quickly screened out during the recycling and reuse through the battery history information described above to improve the recycling efficiency.

### II. Classification of Battery Materials

As different types of batteries with different composition of the cathode materials and different recycling value, it is required to have different recycling methods such that the different types of batteries should be categorized and processed while the batteries are recycling so as to avoid lowering the recycling rate.

For example, the cathode material of the ternary lithium battery consists of the metal elements (such as nickel, cobalt, manganese, etc.,) and the recycling method thereof involves separation and purification of these metal elements.

In an embodiment of the present invention, the batteries can first be classified to separate different types of batteries. The classification may be such as: the ternary lithium battery (the cathode material includes ternary polymers (e.g., lithium nickel cobalt manganate or lithium nickel cobalt aluminate, etc.); the lithium iron phosphate battery (the cathode material is lithium iron phosphate); the lithium cobalt battery: the cathode material is lithium cobalt.

By classifying the batteries, the present invention can realize the following effects: avoiding the reduction of recycling rate caused by mixing different types of batteries; simplifying the recycling process and reducing the cost of recycling; avoiding the leakage of hazardous substances contained in the batteries or causing difficulties in handling, and improving the safety.

### III. Encryption Mechanism

In the present invention, the encryption mechanism is used to encrypt some of the information in the battery history (such as the manufacturer's confidential formula ingredients) to protect the trade secrets, while other information (such as the battery materials, production history, and recycling information) can also be made public to increase the transparency of the recycling industry chain, as illustrated by the following embodiments.

In an embodiment, assuming a battery device is a ternary lithium battery whose material system is NCM, in which the proportion of the four materials used is 11:09:72:08, and the number of recycles is 4. These pieces of information are stored in a specific address expressed as "NCM 1109720804", in which the "NCM" denotes the material system (e.g., nickel cobalt manganese (NCM) of the ternary system). The value "11" in bits 1 and 2 indicates the proportion of the first material (e.g., the proportion of the first material can be lithium). The value "09" in bits 3 and 4 indicates the proportion of the second material (e.g., the second material can be cobalt). The value "72" in bits 5 and 6 indicates the proportion of the third material (e.g., the third material can be nickel). The value "08" in bits 7 and 8 indicates the proportion of the fourth material (e.g., the fourth material can be manganese). The value "0" in bit 9 is an identification code, which can be used to determine whether the battery is original or not, or an arbitrary hash code that is meaningless and can be deleted in the calculation. The value "4" in bit 10 indicates the number of recycles of at least one of the first to fourth materials or the sum thereof, but is not limited thereto.

In an embodiment, the last 10 bits of the information "NCM 1109720804" described above as meaningful code can be converted into the encrypted password through the cryptanalysis of the encryption mechanism (e.g., the 16-bit information "05036E7C").

Specifically, the encryption steps in the cryptanalysis are as follows:
1. The last 10 bits of the code information "NCM 1109720804" are obtained as a meaningful code "1109720804".
2. The 9th bit "0" in the code "1109720804" is meaningless and can be deleted during the calculation.
3. The last 3 bits are taken after the 9th bit was deleted (i.e., the 7th, 8th and 10th bits "084") and are inverted and merged with the first 6 bits "110972" into the bits "084110972".
4. The bits "084110972" as decimal value are converted into the hexadecimal value "05036E7C".
5. The hexadecimal value "05036E7C" is saved as the encrypted password information.
6. The encrypted password information is set on the exterior of the battery device as the identification information (also known as the tag code).

In this way, even if the first-line personnel who carry out recycling cannot read or decrypt the internal information at the first time of the recycling, they can still distinguish whether the lithium battery belongs to the same system through the identification information (i.e., through the identification information (also known as energy certificates), which can achieve the effect of preliminary and rapid classification.

In an embodiment, the different encryption mechanisms may also be used to generate the encrypted code information for different purposes. For example, in the above embodiment, for the purpose of enabling the personnel to easily know the distribution of ingredients for sorting and processing, the decimal value "084110972" which is easily decrypted can also be used as the encrypted code information. In this way, together with the SOP description of the decryption mechanism, it is possible for the personnel to easily know the distribution of ingredients for sorting and processing. Alternatively, in the above embodiment, based on the fact that other supporting machines can be utilized for mass sorting (such as converting the encrypted code information into the QR code and other barcodes that can be easily read and recognized by machines), then the mass sorting can be carried out quickly with the corresponding reading devices.

In this embodiment, although the specific encryption mechanism realized by the combination and conversion is cited as an example for convenience of illustration, but is not limited thereto. The encryption mechanism implemented by the encryption module 228 may also be realized by a specific key, a hash algorithm, an asymmetric encryption algorithm, or a combination thereof.

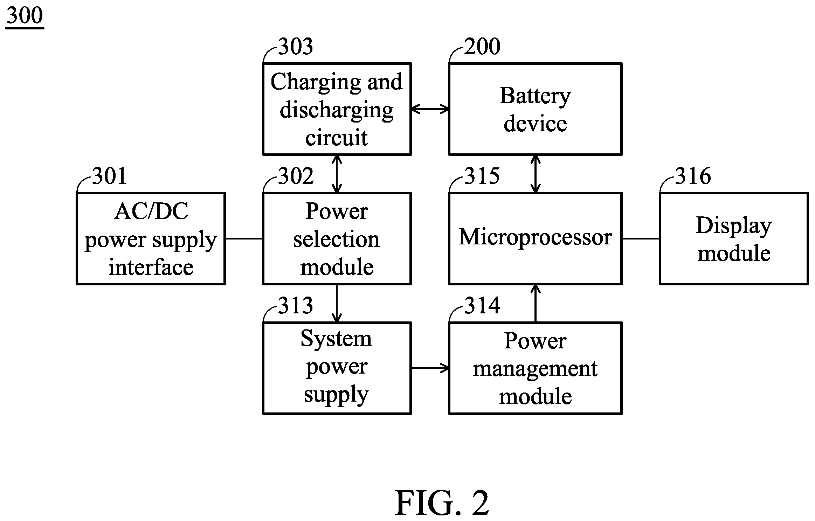

FIG. 2 is a schematic block diagram of the battery device 200 of an embodiment in combination with an electronic device 300 in the present invention.

In an embodiment, the electronic device 300 includes an alternating current/direct current (AC/DC) power supply interface 301, a power selection module 302, a charging and discharging circuit 303, a battery device 200, a microprocessor 315, a power management module 314, a system power supply 313, and a display module 316, but is not limited thereto.

In an embodiment, the AC/DC power supply interface 301 is, for example, an adaptor that can be connected to an external AC power outlet to receive an AC power supply, or a Universal Serial Bus (USB) interface that can receive an external DC power supply. The DC power supply is, for example, another power bank, but is not limited thereto.

In an embodiment, the power selection module 302 is electrically coupled to the AC/DC power supply interface 301. The power selection module 302 uses the external power supply as the primary power source when the AC/DC power supply interface 301 is connected to the external power supply and receives the power supply.

In an embodiment, the battery device 200 can be a vehicle battery and the electronic device 300 can be an electric car or other electric vehicles, then the AC/DC power supply interface 301 can be some charging interfaces for electric vehicles. For example, the Type 1 (SAE J1772) is an AC charging interface for the North American and Japanese markets and is typically used in home and public charging stations; The Type 2 (IEC 62196-2, also known as Mennekes) is the most commonly AC charging interface used in Europe and also supports three-phase power supply; The Type 3 is an AC charging interface used in France and Italy and is designed with a protective cover for safety; The Combined Charging System (CCS) can be further subdivided into Combo 1 and Combo 2, which supports both AC and DC fast-charging. The Combo 1 is common in North America, while the Combo 2 is more prevalent in Europe; The CHAdeMO is a fast DC charging interface and is mainly used in Japanese models; The Tesla Supercharger is the fast DC charging interface in Tesla and is exclusively used by Tesla vehicles, but some regions are starting to support other car models; The GB/T is a standard electric vehicle (EV) charging interface in China, which includes both AC and DC versions.

In an embodiment, the power selection module 302 is electrically coupled to the charging and discharging circuit 303 and the system power supply 313. In an embodiment, the power selection module 302 uses the external power supply as the primary power source when the AC/DC power supply interface 301 is connected to the external power supply and receives the power supply. The power selection module 302 charges the battery device 200 through the charging and discharging circuit 303 and also supplies power to the system power supply 313 so as to provide power to the connected external system. In an embodiment, the power selection module 302 uses the battery device 200 as the primary power source when the AC/DC power supply interface 301 is not connected to the external power supply, and the power from the battery device 200 is supplied to the system power source 313 through the charging and discharging circuit 303 and the power selection module 302 to provide power to the connected external system.

In an embodiment, the charging and discharging circuit 303 includes, for example, the charging switch 208, the discharging switch 210, the protection device 212, and the second-level protection chip 214 as shown in FIG. 1.

In an embodiment, the system power supply 313 refers to a module that supplies power to the connected electronic device (e.g., 3C product, laptop, tablet device, mobile device such as smart phone, robot, electric vehicle, etc.). The system power supply 313 is electrically coupled to the power selection module 302 and the power management module 314.

In an embodiment, since the battery device 200 as shown in FIG. 2 is the same as that shown in FIG. 1, its description is hereby omitted.

In an embodiment, the microprocessor 315 includes a combination of CPU, software, firmware, and the like, which is the core computing unit of the electronic device 300 responsible for processing computing and control instructions. In an embodiment, the microprocessor 315 is electrically coupled to the battery device 200, the power management module 314, and the display module 316. The microprocessor 315 can decrypt and read the battery history information of the battery device 200 by using the decryption mechanism corresponding to the encryption mechanism and output the battery history information to the display module 316 for displaying.

In an embodiment, the microprocessor 315 may execute, for example, a specialized software with the decryption mechanism to carry out the functions as the decryption module to view the battery history information of the storage unit 226 in the battery device 200. The functions and actions of the decryption module may be realized by the microprocessor 315 executing the corresponding program, or some hardware (such as system-on-chip (SoC), application-specific integrated circuit (ASIC), application processor (AP), or digital signal processor (DSP)), but is not limited thereto.

In an embodiment, the data in the battery history information can be divided into dynamic data and static data. The dynamic data are discharge voltage, discharge current, cycle life, and the degree of capacity degradation, etc. The discharge voltage and discharge current refer to the voltage and current that the battery unit can provide when discharged and may be degraded during the process of recycling. The cycle life, for example, refers to the total number of charging and discharging cycles the battery has undergone. The degree of capacity degradation refers to the total energy that the battery can release after being fully charged, and it is possible to degrade during the process of recycling of the battery, but is not limited thereto. The static data are the material system, supplier information, the number of recycles, the proportion of materials, etc., such that the composition of the battery material system and the proportion of distribution can be easy to understand at a glance, specifically as the following Table 2.

**Table 2:**

| Static data | Example |
|---|---|
| Material system | NCM |
| First material | Lithium |
| First supplier | Company A |
| Proportion | 10% |
| Number of recycling | 1 |
| Second material | Cobalt |
| Second supplier | Company B |
| Proportion | 20% |
| Number of recycles | 2 |
| Third material | Nickel |
| Third supplier | Company C |
| Proportion | 70% |
| Number of recycling | 3 |

In the static data of Table 2, it is recorded that the material system is NCM, the first material is lithium, the supplier of the first material is company A, the proportion is 10% and the number of recycles is 1; the second material is cobalt, the supplier of the second material is company B, the proportion is 20%, and the number of recycles is 2; the third material is nickel, the supplier of the third material is company C, the proportion is 70%, and the number of recycles is 3.

In this way, faster identification and classification can be achieved based on the labeling information on the exterior. In an embodiment, the static data may be sealed by the specific instructions (e.g., sealed) in the input storage unit for the purpose of ensuring the trustworthiness of the battery history, preventing tampering and forgery, etc., but is not limited thereto.

In an embodiment, the static data stored in the storage unit 226 may also include certification data to function as a certification chip. The certification data may include, but is not limited thereto, the Restriction of Hazardous Substances Directive (RoHS), which prohibits the use of certain hazardous substances (e.g., lead, cadmium, mercury, etc.) in electronic products; the Waste Electrical and Electronic Equipment (WEEE), which regulates the recycling and treatment of electronic products to ensure that electronic waste is treated in an environmentally friendly manner; the International Organization for Standardization (ISO) 14001, which is an environmental management system standard that ensures compliance with environmental regulations and policies during the production process; the Electronic Product Environmental Assessment Tool (EPEAT), which evaluates and certifies the environmental performance of electronic products (e.g., battery life and recycling rate); the Conformité Européenne (CE) mark, which indicates that the product complies with EU safety and environmental standards (e.g., the safety and environmental performance of the battery).

In an embodiment, the power management module 314 is electrically coupled to the microprocessor 315 and the system power supply 313. The power management module 314 can monitor and regulate the power distribution and consumption of the electronic device 300 in order to optimize the power usage, extend battery life, and prevent overloading or short-circuiting, but not limited thereto.

In an embodiment, the display module 316 is electrically coupled to the microprocessor 315. The display module 316 displays the operating status and information of the battery device 200 in order to provide the user interface that displays the battery history information, the battery power status, and warning messages in case of an abnormality, but it is not limited thereto. For example, the display module 316 can also be simplified as a LED warning light that has the warning function only.

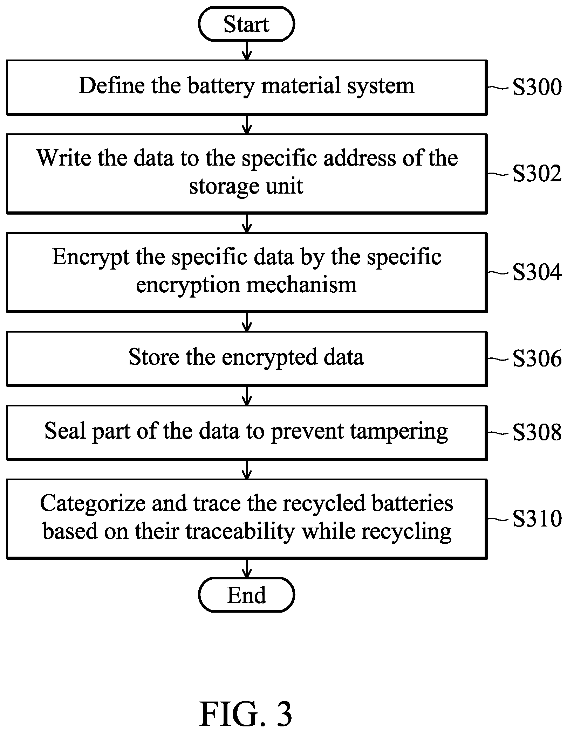

FIG. 3 is a flowchart of the recycling method of the battery device of an embodiment in the present invention.

The steps in FIG. 3 are as follows:
Step S300: The battery material system is defined, which identifies and describes the static data (e.g., material systems, material types, supplier information, cycle times, material proportion) and other dynamic data (e.g., discharge voltages, discharge currents) that make up the battery cells.
Step S302: The data is written to the specific address of the storage unit 226. Namely, the dynamic data and static data described above as battery history are written to the first specific address of the storage unit 226.
Step S304: The specific data is encrypted using the specific encryption mechanism (e.g., the encryption mechanism as exemplified in previous embodiments, or encrypt the specific data in the battery history using the specific key, hash algorithm, or asymmetric encryption algorithm such as encrypting data at rest).
Step S306: The encrypted data is stored in another specific address. Namely, the encrypted static data is written to the second specific address in the storage unit 226, and the encrypted static data (e.g., tag code) can be used as identification information and be stored in the second specific address that is available for reading.
Step S308: Part of the data is sealed to prevent tampering. Namely, the appropriate sealing technology is selected and set up (e.g., use digital signature, tamper-resistant sealing, or Read Only Memory (ROM) that only allows one-time writing to produce certificate chips, etc.) to ensure the immutability and integrity of the static data.
Step S310: The recycled batteries are categorized and traced based on their history while recycling. Namely, the history management system is set up for recycling the recycled batteries, recording the production, use and recycling process of each battery. The recycled batteries are categorized according to the battery history information of the batteries (e.g., identification information on the external surface of the batteries), so as to ensure that different types and conditions of batteries can be appropriately recycled and disposed of.

In an embodiment, the identification information includes at least the classification information, date of manufacture, material system, etc., used to classify the battery system. The classification information includes at least the encrypted material proportion information, etc., so as to enable the first-line personnel that execute the sorting and recycling to quickly identify batteries with the similar material proportion based on the classification information, and then sort the batteries for recycling.

In an embodiment, since the battery history includes the supplier information, recycling times information, etc., it is possible to implement the history tracing such that the source and history of the battery can be traced in the event of any problem to ensure safety and compliance.

In the present invention, the entire life cycle of batteries can be tracked of from production to use to recycling, and the recycling and sustainable management of battery materials can be realized. In addition, the present invention also can help prevent oligopoly in the battery material market, reduce dependence on a single market material, and promote the development of the circular economy.

The present invention provides a battery device and recycling method and system thereof. The recycling of battery materials and sustainable management are realized through the establishment of the battery history, classification and treatment, encryption mechanism and other technologies in line with the trend and goals of ESG, and promote the development of the circular economy.

Although the embodiments of the present invention are as described above, it should be understood that the foregoing is presented as an example and not as the limitation. Many of the changes in the exemplary embodiments described above in accordance with the present invention can be performed without violating the scope of the invention. Therefore, the breadth and scope of the present invention should not be limited by the embodiments described above. More specifically, the scope of the present invention should be defined in terms of the following scope of the patent application and its equivalents.

Although the above invention has been illustrated and depicted by one or more related embodiments, equivalent variations and modifications will be contemplated by other skilled in the art based on the above specifications and accompanying drawings. Furthermore, although a particular feature of the embodiment of the present invention has been illustrated and depicted by one or more related embodiments, the feature may be combined with one or more other features, such that there may be a need for and contribution to any known or particular application of the invention.

Unless otherwise defined, all terms used herein (including technical or scientific terms) are to be understood generally by persons having ordinary skill in the art of the invention. It should be appreciated that terms such as those defined in the dictionaries used by the public should be construed as having the same meaning in the context of the technology to which they relate. These terms are not to be construed as idealized or overly formal unless explicitly defined in the invention.

## Claims

1. A smart battery device, comprising:
a processing module; and
a battery cell;
wherein the processing module comprises:
a storage module, configured to store battery history associated with the battery cell, wherein the processing module is configured to read and write to the storage module;
an encryption module, configured to encrypt at least a portion of information in the battery history by using an encryption mechanism;
the battery cell is electrically coupled to the processing module, and the processing module is powered by the battery cell.

2. The smart battery device as claimed in the previous claim, further comprising:
an identification information, set up on an external surface of the smart battery device;
wherein the identification information having at least classification information, date of manufacture and material system is to classify battery system.

3. The smart battery device as claimed in the previous claim, wherein the classification information is at least the portion of the information in the battery history that has been encrypted by the encryption module using the encryption mechanism.

4. The smart battery device as claimed in any of the previous claims, wherein the battery history comprises a material system, a material type, a supplier, a number of recycles, and a material proportion.

5. The smart battery device as claimed in any of the previous claims, wherein the battery history further comprises at least one of a discharge voltage, a discharge current, a cycle life and a degree of capacity degradation of the battery cell.

6. The smart battery device as claimed in any of the previous claims, wherein the encryption mechanism is at least one of a specific encryption mechanism, a specific key, a hash algorithm, or an asymmetric encryption algorithm, implemented through combination and transformation.

7. The smart battery device as claimed in any of the previous claims, wherein at least the portion of the information in the battery history is sealed after input to prevent tampering.

8. The smart battery device as claimed in any of the previous claims, wherein the smart battery device is a power bank, a vehicle battery or a rechargeable battery.

9. A recycling system for a smart battery device, comprising:
the smart battery device as claimed in any of the previous claims; and
an electronic device, having a decryption module, capable of decrypting and reading an encrypted battery history of the smart battery device.

10. A recycling method for a smart battery device, comprising:
a storage step, storing battery history in the smart battery device, wherein the battery history comprises a material system, a production history, and a recycling information;
an encryption step, encrypting at least a portion of information in the battery history by an encryption mechanism; and
a sorting step, sorting the smart battery device for recycling based on the battery history.

## Amended claims

### Amended claims in accordance with Rule 137(2) EPC.

1. A smart battery device (200), comprising:
a processing module; and
a battery cell (202); wherein
the processing module comprises:
a storage module, configured to store battery history associated with the battery cell (202), wherein the processing module is configured to read and write to the storage module;
an encryption module (228), configured to encrypt at least a portion of information in the battery history by using an encryption mechanism;
the battery cell (202) is electrically coupled to the processing module, and the processing module is powered by the battery cell (202), and
the battery history comprises a material system, a material type, a supplier, a number of recycles, and a material proportion.

2. The smart battery device (200) as claimed in claim 1, further comprising:
an identification information, set up on an external surface of the smart battery device (200); wherein
the identification information having at least classification information, date of manufacture and material system is to classify battery system.

3. The smart battery device (200) as claimed in claim 2, wherein the classification information is at least the portion of the information in the battery history that has been encrypted by the encryption module (228) using the encryption mechanism.

4. The smart battery device (200) as claimed in claim 1, wherein the battery history further comprises at least one of a discharge voltage, a discharge current, a cycle life and a degree of capacity degradation of the battery cell (202).

5. The smart battery device (200) as claimed in claim 1, wherein the encryption mechanism is at least one of a specific encryption mechanism, a specific key, a hash algorithm, or an asymmetric encryption algorithm, implemented through combination and transformation.

6. The smart battery device (200) as claimed in claim 1, wherein at least the portion of the information in the battery history is sealed after input to prevent tampering.

7. The smart battery device (200) as claimed in claim 1, wherein the smart battery device (200) is a power bank, a vehicle battery or a rechargeable battery.

8. A recycling system for a smart battery device (200), comprising:
the smart battery device (200) as claimed in claim 1; and
an electronic device, having a decryption module, capable of decrypting and reading an encrypted battery history of the smart battery device (200).

9. A recycling method for a smart battery device (200), comprising:
a storage step, storing battery history in the smart battery device (200), wherein the battery history comprises a material system, a material type, a supplier, a number of recycles, and a material proportion;
an encryption step, encrypting at least a portion of information in the battery history by an encryption mechanism; and
a sorting step, sorting the smart battery device (200) for recycling based on the battery history.
